# EUROPEAN PATENT APPLICATION

(11) **EP 4 345 753 A2**
(43) Date of publication of application: **03.04.2024**
(21) Application number: 23199937.6
(22) Date of filing: 27.09.2023
(51) Int. Cl.: G06T 11/00

(54) **CT RECONSTRUCTION FOR MACHINE CONSUMPTION**

(30) Priority: 27.09.2022 US 202217935581
(71) Applicant: Siemens Healthineers AG, 91301 Forchheim (DE)
(72) Inventor: HOLBROOK, Matthew, Pennington, NJ, 08534 (US); GULSUN, Mehmet Akif, Princeton, NJ, 08540 (US); NADAR, Mariappan S., Plainsboro, NJ, 08536 (US); SHARMA, Puneet, Princeton Junction, NJ, 08550 (US); MAILHE, Boris, Plainsboro, NJ, 08536 (US)
(74) Representative: Horn Kleimann Waitzhofer Schmid-Dreyer Patent- und Rechtsanwälte PartG mbB

(57) **Abstract**

System and methods for determining and implementing optimized reconstruction parameters for computer-aided diagnosis applications. A simulator generates image data using different combinations of reconstruction parameters. The image data is used to evaluate or train machine learned networks that are configured for computer-aided diagnosis applications to determine which reconstruction parameters are optimal for application or training.

## Description

### FIELD

This disclosure relates to image reconstruction and computer aided clinical tasks.

### BACKGROUND

Computer-aided diagnosis (CAD) for medical imaging uses machine learning methods to analyze patient image data which can then be used to assist clinicians in their decision-making process. Analysis of imaging in the medical field is a very crucial task as imaging is commonly used to quickly diagnose and assess the condition of a patient. Imaging techniques like CT, MRI, X-ray, endoscopy, and ultrasound among others may be used to acquire information about a patient. This information may then be reconstructed to generate an image for further analysis or processing. Reconstruction may include increasing an image resolution and reducing artifacts or noise included in an image among other goals.

The reconstruction process (and the imaging process) is generally optimized to provide the best diagnostic quality image for human consumption to aid in making accurate clinical decisions. The same data and images are also currently used to develop artificial intelligence (AI) companion solutions to assist clinicians for certain clinical tasks. However, images processed in this way may not be optimal for machine consumption and may limit the prediction power of AI algorithms. The same images shown to a human observer are used to train and run CAD algorithms. The quality of the input determines the quality of the output for both training and implementation of these algorithms. These CAD algorithms may underperform or provide worse results due to the non-optimized inputs that are provided.

### SUMMARY

By way of introduction, the preferred embodiments described below include methods, systems, instructions, and computer readable media for determining and implementing optimized reconstruction parameters for input data for computer-aided diagnosis applications.

In a first aspect, a method for determining optimal reconstruction parameters for clinical aided diagnostics of a given clinical task is provided. The method includes reconstructing a plurality of sets of imaging data from a set of raw data, each set of the plurality of sets of imaging data using unique combinations of reconstruction parameters; inputting each of the plurality of sets of imaging data into a machine trained network for the given clinical task; scoring an output of the machine trained network for each of the input plurality of sets of imaging data; and identifying optimal reconstruction parameters based on the scoring.

In an embodiment, the reconstruction parameters comprise one or more of reconstruction algorithms, reconstruction kernels, pixel spacing, slice thickness and spacing, and beam hardening corrections. Reconstructing comprises reconstructing using a simulator. In an embodiment, the raw data comprises a CT sinogram.

In an embodiment, one or more combinations of the reconstruction parameters provide minimized regularization of the imaging data.

The given clinical task comprises coronary lumen segmentation or organ contouring. Scoring comprises comparing the output to expert annotated data.

In an embodiment, the method further includes performing a medical imaging procedure to acquire scan data; reconstructing a first image from the scan data using the optimal reconstruction parameters; inputting the image into a computer aided diagnostic application configured for a clinical task; and providing a diagnosis based on an output of the computer aided diagnostic application. In addition, the method may include reconstructing a second image from the scan data using a different set of reconstruction parameters; and displaying the second image for an operator.

In a second aspect, a method for generating an optimized machine trained network for clinical aided diagnostics of a given clinical task is provided. The method includes reconstructing a plurality of sets of imaging data from a set of raw data, each set of the plurality of sets of imaging data using different combinations of reconstruction parameters; machine training different instances of a network using different combinations of the plurality of sets of imaging data reconstructed using different reconstruction parameters; comparing a performance of the different instances of the machine trained network for the given clinical task; and selecting the optimized machine trained network based the comparison.

The method may further include performing a medical imaging procedure to acquire scan data; reconstructing a first image from the scan data using the reconstruction parameters configured to provide minimized processing of the scan data; inputting the image into the optimized machine trained network; and providing an output of the optimized machine trained network.

In a third aspect, a system for clinical aided diagnostics of a given clinical task is provided. The system includes a medical imaging device, a machine trained network, and an image processor. The medical imaging device is configured to acquire raw data. The machine trained network is configured for the given clinical task. The image processor is configured to select optimal reconstruction parameters for the machine trained network, reconstruct a first image using the optimal reconstruction parameters, and input the first image into the machine trained network for the given clinical task, the image processor further configured to reconstruct a second image using different reconstruction parameters. The second image and the output of the machine trained network are provided to an operator.

The system may further include a display configured to display the second image the output of the machine trained network. The given clinical task may comprise segmentation of an organ of a patient. The medical imaging device may comprise one of a CT device, MRI device, X-ray device, or ultrasound device.

The present invention is defined by the following claims, and nothing in this section should be taken as a limitation on those claims. Further aspects and advantages of the invention are discussed below in conjunction with the preferred embodiments and may be later claimed independently or in combination.

### BRIEF DESCRIPTION OF THE DRAWINGS

Figure 1 depicts an embodiment of a system for reconstruction for machine learning according to an embodiment.
Figure 2 depicts an example workflow of the system of Figure 1.
Figure 3 depicts an example CT imaging device.
Figure 4 depicts an example of reconstruction protocol parameters.
Figure 5 depicts an example of combinations of reconstruction protocol parameters.
Figure 6A depicts an example of a coronary lumen segmentation.
Figure 6B depicts examples of cross sections of the image of Figure 6A using different reconstruction parameters according to an embodiment.
Figure 7 depicts examples of boundaries provided by a CAD application using images generated using different reconstruction parameters according to an embodiment.
Figure 8 depicts an example workflow for determining optimal reconstruction parameters.
Figure 9 depicts a system for determining and/or applying optimal reconstruction parameters or an optimally trained network according to an embodiment.
Figure 10 depicts a workflow for applying optimal reconstruction parameters or an optimally trained network according to an embodiment.

### DETAILED DESCRIPTION

Embodiments described herein provide systems and methods for optimizing reconstruction parameters for computer-aided diagnosis applications. Imaging data is generated with varied acquisition and reconstruction protocol parameters. Optimal parameters are identified for existing computer-aided diagnosis applications and for use in end-to-end training for optimal and robust computer-aided diagnosis applications.

Computer-aided diagnosis (CAD), also called computer-aided detection includes applications that assist doctors in the interpretation of medical images. These applications include the detection of disease and anatomic structures of interest, the classification of lesions, the quantification of disease and anatomic structures (including volumetric analysis, disease progression, and temporal response to therapy), cancer risk assessment, and physiologic evaluation, among others. CAD applications may be used in nearly all imaging modalities (radiography, computed tomography, ultrasound, magnetic resonance imaging, and radionuclide imaging) across a wide range of anatomic systems (pulmonary, breast, skeletal, cardiac, gastrointestinal, neurologic, vascular, and genitourinary). These techniques seek to maximize the information that may be extracted from medical images by augmenting an operators subjective, qualitative interpretation of the displayed images with objective, quantitative computations of the underlying numeric image data.

In a typical scenario, a medical imaging procedure is performed using an imaging modality. Raw data may be reconstructed into image data that is made available to the operator and the any CAD application. For most CAD applications in analysis of medical images, reconstruction parameters are not directly addressed or explored. The same images shown to a human observer are used to train computer aided diagnostic (CAD) algorithms. This may result in the CAD algorithms providing less optimal information as the input may have been altered for human consumption instead of machine-based analysis.

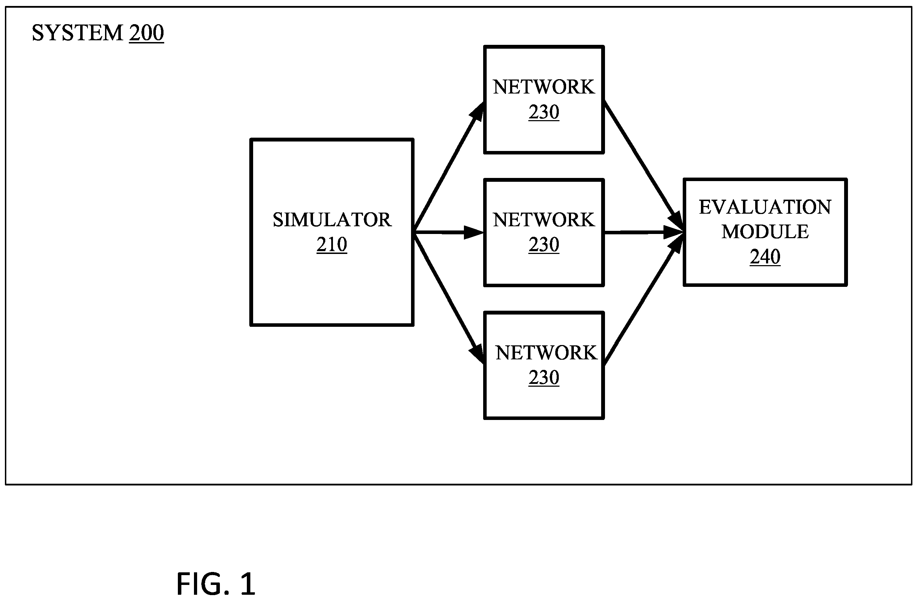

Figure 1 depicts an example system 200 for optimization of reconstruction parameters for CAD applications. Different networks and reconstructions parameters may be optimized for different applications. The following examples use coronary lumen segmentation and organ contouring for radiation as example CAD applications. Any CAD application may be used. The following examples further use computed tomography (CT) as the example imaging modality. Different modalities may be used. Figure 1 includes a simulator 210 configured to simulate acquiring and reconstructing imaging data with varied acquisition and reconstruction protocol parameters, one or more instances of a machine trained network 230 configured for CAD, and an evaluation module 240 configured to evaluate the outputs of the one or more instances of the machine trained networks 230.

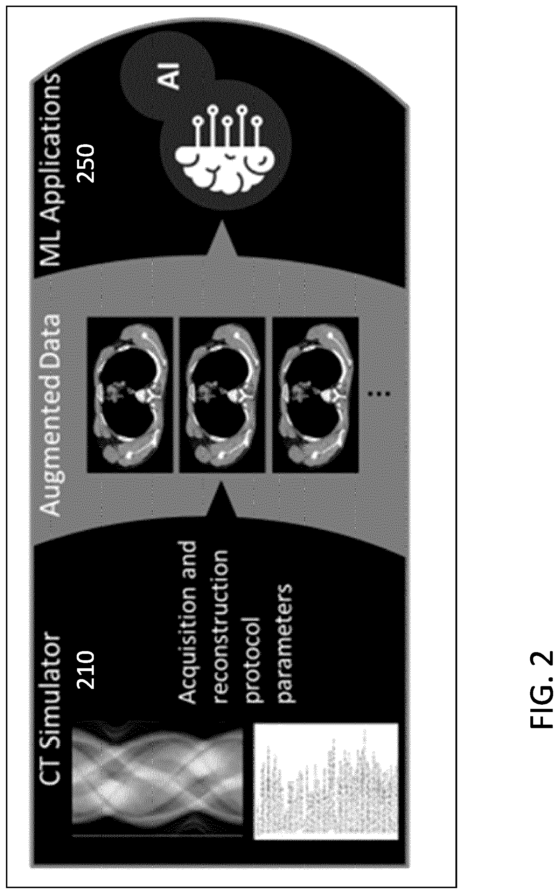

Figure 2 depicts a basic flowchart for optimization of reconstruction parameters using the components of Figure 1. The system uses clinically acquired sinograms to simulate reconstructions with varied acquisition and reconstruction protocol parameters using, for example, a CT simulator 210. The search space of reconstruction parameters may include different combinations of reconstruction algorithms (weighted filtered backprojection and ADMIRE of varying strengths), reconstruction kernels, pixel spacing, slice thickness and spacing, and beam hardening corrections among others. As an example, one prominent opportunity in this search space is reconstructions that attempt to preserve the raw sinogram data with as little additional processing as possible. The augmented data may present machine learning (ML) applications 250 such as CAD applications with the most complete view of the raw, reconstructed, data without regard to aesthetic considerations. The resulting banks of augmented data is then used to evaluate and train ML applications for using in CAD applications. An evaluation may be performed by inputting the reconstructions into ML applications and determining which parameters provide the best outcome.

In an embodiment, the networks 230 are trained using each set of unique reconstruction parameters individually and collectively to develop ML networks 230 that are optimized for a given clinical task. During training time besides using varied reconstruction parameters to augment the training data an optimization may be applied to select the best reconstruction parameters among a large range of possibilities that would yield the best performance on the selected clinical task (e.g., minimal deviations of produced anatomical contours for radiation therapy planning). These reconstruction parameters that lead to optimal algorithm performance may be tied to an algorithm version (or task) so that a medical imaging device can automatically produce an optimal reconstructions for the ML application instead of just a reconstruction for the radiologist or radiation oncologist.

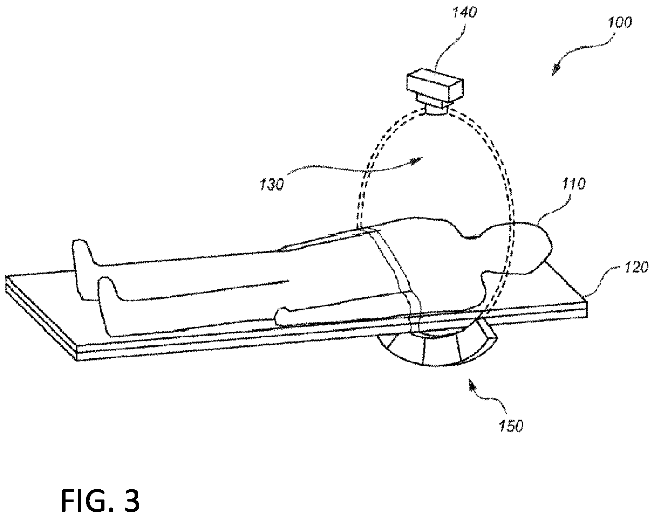

The simulator 210 is configured to used clinically acquired data to simulate reconstructions with varied acquisition and reconstruction protocol parameters. In an embodiment, the simulator 210 is configured to simulate a CT system. Figure 3 depicts an example CT imaging system 100. An object 110 (e.g., a patient) is positioned on a table 120 that is configured, via a motorized system, to move the table to multiple positions through a circular opening 130 in the CT imaging system 100. An X-ray source 140 (or other radiation source) and detector element(s) 150 are a part of the CT imaging system 100 and are configured to rotate around the subject 110 on a gantry while the subject is inside the opening 130. The rotation may be combined with movement of the bed to scan along a longitudinal extent of the patient. Alternatively, the gantry moves the source 140 and detector 150 in a helical path about the patient. In a CT imaging system 100, a single rotation may take approximately one second or less. During the rotation of the X-ray source 140 and/or detector, the X-ray source 140 produces a narrow, fan-shaped (or cone-shaped) beam of X-rays that pass through a targeted section of the body of the subject 110 being imaged. The detector element(s) 150 (e.g., multi-ring detector elements) are opposite the X-ray source 140 and register the X-rays that pass through the body of the subject being imaged and, in that process, record a snapshot used to create an image. Many different snapshots at many angles through the subject are collected through one or more rotations of the X-ray source 140 and/or detector element(s) 150. The image data generated by the collected snapshots are transmitted to a control unit that stores or reconstructs the image data based on the snapshots into one or several cross-sectional images or volumes of an interior of the body (e.g., internal organs or tissues) of the subject being scanned by the CT imaging system 100.

To provide similar information with as little variation as possible outside of differences in acquisition parameters and reconstruction parameters, the system uses a CT simulator 210 to simulate either the acquisition or the processing of the output CT data. The simulator 210 is configured to reconstruct images from the output imaging data using the different reconstruction parameters. Two major categories of reconstruction methods exist, analytical reconstruction and iterative reconstruction (IR). The simulator 210 may use analytical reconstruction method such as filtered backprojection (FBP), which uses a one-dimensional filter on the projection data before back projecting (2D or 3D) the data onto the image space. The simulator 210 may also use an IR reconstruction method that iteratively optimizes an objective function that includes a data fidelity term and a regularization term. The optimization process in IR involves iterations of forward projection and backprojection between image space and projection space.

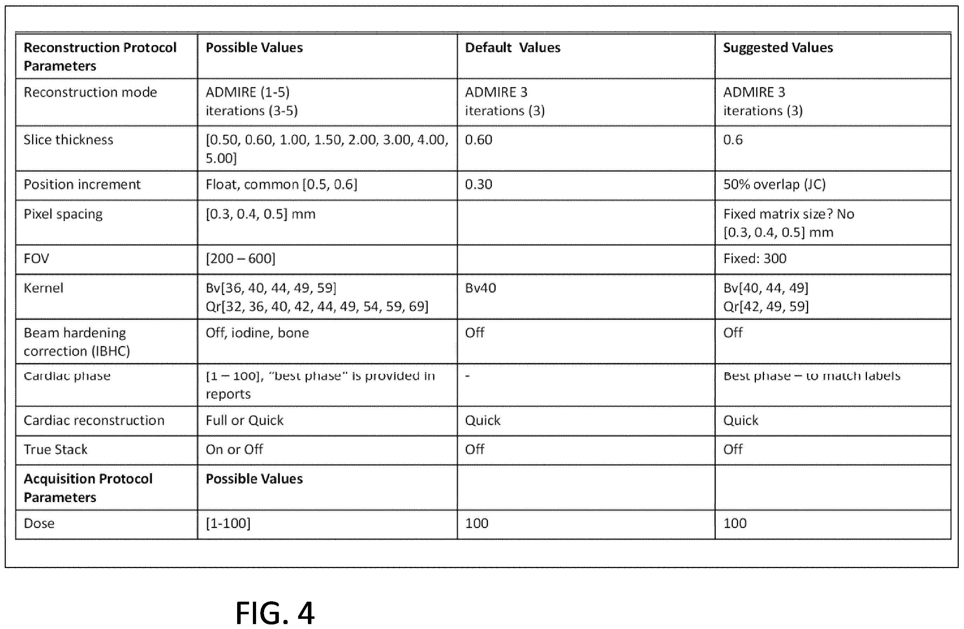

The simulator 210 may adjust different acquisition parameters and/or reconstruction parameters to provide multiple different sets of parameters to be evaluated by the evaluation module 240 as described below. Figure 4 depicts a table of reconstruction protocol parameters (and one acquisition protocol parameter). A non-exhaustive list of parameters may include the reconstruction mode, the slice thickness, the position increment, the pixel spacing, the field of view, the Kernel, the beam hardening correction, the cardiac phase, the cardiac reconstruction, and the true stack. Figure 4 lists possible values, default values, and suggested values. Some of the reconstruction parameters may affect the output more than others. For example, the reconstruction kernel is one of the most important parameters that affect the image quality. There is a tradeoff between spatial resolution and noise for each kernel. A smoother kernel generates images with lower noise but with reduced spatial resolution. A sharper kernel generates images with higher spatial resolution but increases the image noise. Another important reconstruction parameter is slice thickness, which controls the spatial resolution in the longitudinal direction, influencing the tradeoffs among resolution, noise, and radiation dose. The possible values, default values, and suggested values are all examples and may be different for different modalities, devices, or ML applications. Other parameters and/or values may be used.

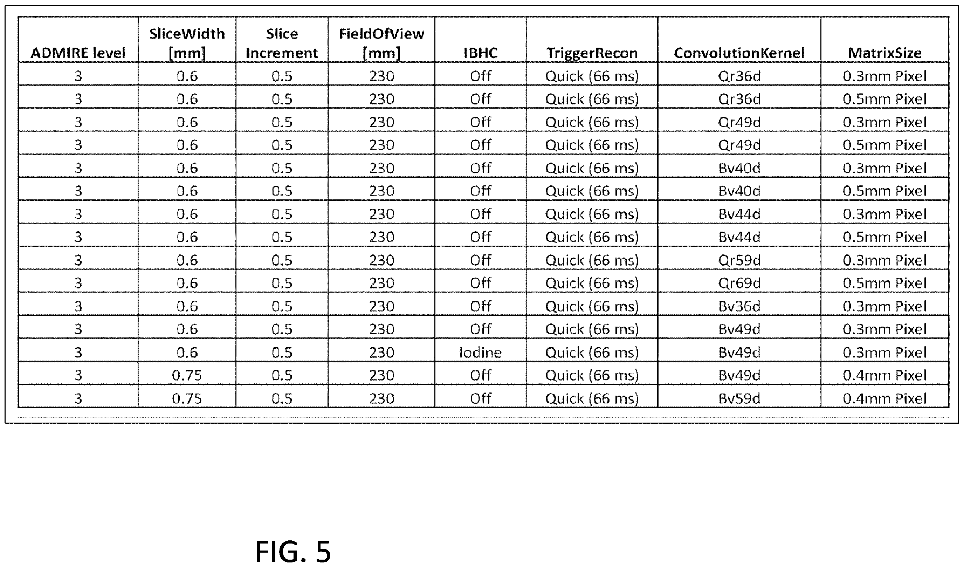

Figure 5 depicts an example of different combinations of parameters. Since there are potentially hundreds, thousands, or more combinations the simulator 210 may attempt to use combinations that provide distinct results. The output of the simulator 210 is a databank of multiple augmented versions of image data that respectively share common raw data but differ in their reconstruction process. The simulator 210 may simulate reconstruction of raw data from multiple different scans. The simulator 210 may also simulate different acquisition parameters where possible.

Each of the machine learned networks 230 are configured to input the image data provided by the simulator 210 and output some form of clinical or beneficial information (for example segmented masks, contours, or assessments). In an embodiment, each of the networks 230 is configured to perform the same task. In this scenario, a goal is to determine which reconstruction parameters or process provides the most optimal results. In another embodiment, each of the networks 230 is trained end to end using the augmented data and then evaluated to identify which reconstruction parameters or process is optimal for training and producing optimal results.

The clinical tasks for the networks 230 may include any downstream clinical task that includes machine learning and/or a trainable network / model. Example tasks may include segmentation, contouring, detection of disease and anatomic structures of interest, the classification of lesions, the quantification of disease and anatomic structures (including volumetric analysis, disease progression, and temporal response to therapy), cancer risk assessment, and physiologic evaluation, among others. One specific example of a common clinical task is cardiac image segmentation. Cardiac image segmentation is an important first step in numerous applications. Cardiac image segmentation partitions the image into a number of semantically (i.e., anatomically) meaningful regions, based on which quantitative measures can be extracted, such as the myocardial mass, wall thickness, left ventricle (LV) and right ventricle (RV) volume as well as ejection fraction (EF) etc. Typically, the anatomical structures of interest for cardiac image segmentation include the LV, RV, left atrium (LA), right atrium (RA), and coronary arteries. Image segmentation may be used for coronary artery lumen delineation, to localize and grade stenosis. This process may also be used for coronary heart disease evaluation. Any clinical task may be provided by the ML application / CAD application.

The networks 230 may be configured using any type of machine learning architecture. In an embodiment, the machine learned model may be configured as a classifier that is trained to classify pixels, voxels, or regions as a type(s) of tissue, part of an organ, etc. Other types of network architectures may be used such as deep belief nets (DBN), or other deep networks. Other network arrangements may be used, for example, a 3D Very Deep Convolutional Networks (3D-VGGNet). VGGNet stacks many layer blocks containing narrow convolutional layers followed by max pooling layers. A 3D Deep Residual Networks (3D-ResNet) architecture may be used. A Resnet uses residual blocks and skip connections to learn residual mapping.

The network 230 may be trained using supervised or unsupervised learning. The network 230 may include a neural network that is defined as a plurality of sequential feature units or layers. Sequential is used to indicate the general flow of output feature values from one layer to input to a next layer. Sequential is used to indicate the general flow of output feature values from one layer to input to a next layer. The information from the next layer is fed to a next layer, and so on until the final output. The layers may only feed forward or may be bi-directional, including some feedback to a previous layer. The nodes of each layer or unit may connect with all or only a sub-set of nodes of a previous and/or subsequent layer or unit. Skip connections may be used, such as a layer outputting to the sequentially next layer as well as other layers. Rather than pre-programming the features and trying to relate the features to attributes, the deep architecture is defined to learn the features at different levels of abstraction based on the input data. The features are learned to reconstruct lower-level features (i.e., features at a more abstract or compressed level). Each node of the unit represents a feature. Different units are provided for learning different features. Various units or layers may be used, such as convolutional, pooling (e.g., max pooling), deconvolutional, fully connected, or other types of layers. Within a unit or layer, any number of nodes is provided. For example, one hundred nodes are provided. Later or subsequent units may have more, fewer, or the same number of nodes. Unsupervised learning may also be used based on the distribution of the samples, using methods such as k-nearest neighbor.

In an example, the network 230 is configured as a CNN. A standard CNN includes an input layer, an output layer, and a stack of functional layers in between that transform an input into an output in a specific form (e.g., vectors). The functional layers may include convolutional layers, pooling layers and/or fully connected layers. In general, a convolutional layer contains a number of convolution kernels/filters, which is followed by a normalization layer (e.g., batch normalization) and a non-linear activation function (e.g., rectified linear unit (ReLU)) to extract feature maps from the input. These feature maps are then down sampled by pooling layers that remove redundant features to improve the statistical efficiency and model generalization. After that, fully connected layers are applied to reduce the dimension of features from its previous layer and find the most task-relevant features for inference. The output of the network 230 is a fixed-sized vector where each element may be a probabilistic score for each category (for image classification), a real value for a regression task (e.g., the left ventricular volume estimation) or a set of values (e.g., the coordinates of a bounding box for object detection and localization).

The training data used for configured or training the network 230 includes many instances of medical imaging data / medical images and the corresponding ground truth / annotations. Tens, hundreds, or thousands of samples are acquired, such as from scans of different patients and/or by image processing (for example, by the simulator 210) to create further samples. In an embodiment, the training data is provided exclusively by the simulator 210. In another embodiment, the training data is acquired exclusively from clinical studies.

A computer (e.g., processor) machine trains the network 230. In one embodiment, deep learning is used. The training learns both the features of the input data and the conversion of those features to the desired output. Backpropagation, RMSprop, ADAM, or another optimization is used in learning the values of the learnable parameters of the network 230 (e.g., the convolutional neural network (CNN) or fully connection network (FCN)). Where the training is supervised, the differences (e.g., L1, L2, mean square error, or other loss) between the estimated output and the ground truth output are minimized. Machine learning is an offline training phase where the goal is to identify an optimal set of values of learnable parameters of the network 230 that can be applied to many different inputs. These machine-learned parameters may subsequently be used during clinical operation.

The networks 230, once trained and configured, are ready to input data from the simulator 210. In an embodiment, multiple instances of the same network 230 are each input different combinations of data from the simulator 210. In another embodiment, the networks 230 are trained differently using different combinations of the data from the simulator 210. The outputs of the networks 230 are scored and/or evaluated by the evaluation module 240.

The evaluation module 240 is configured to evaluate the outputs of the networks 230 and determine which reconstruction parameters are optimal for particular clinical tasks. In an example, each instance of the networks 230 is input different combinations of data from the simulator 210 that are generated from the same raw data but using different reconstruction parameters. The outputs of the networks 230 are then judged against an expertly annotated output (that, for example, may be agreed to be the optimal or correct output). The evaluation may be based on ground truth generated from other modalities. For coronaries, these modalities may include Angio, OCT, or IVUS, etc. Different modalities may provide different levels or types of results. For example, Intravascular ultrasound (IVUS) and optical coherence tomography (OCT) provide unique information for enhanced lesion preparation, optimal stent sizing, recognizing post PCI complications, and the etiology of stent failure. This information may be used to evaluate how the networks perform when provided data from CT, MRI, or other modalities.

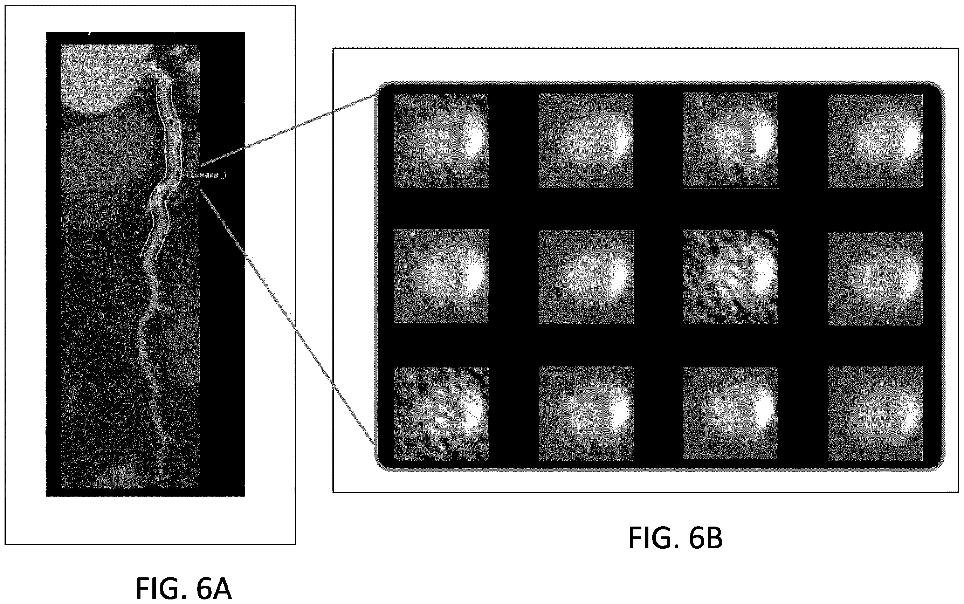

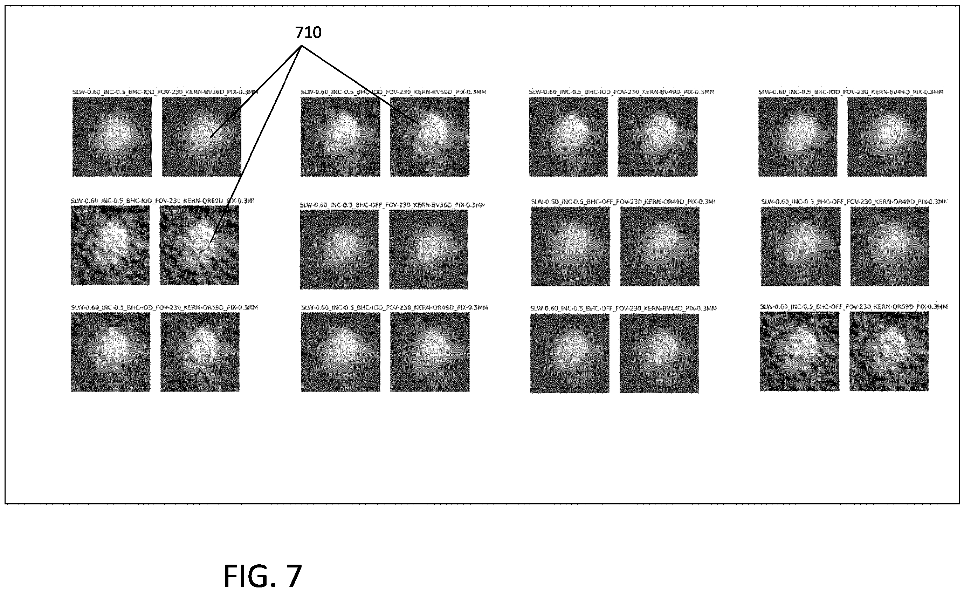

Figure 6A depicts a coronary lumen segmentation. Figure 6B depicts different simulated reconstructions of a cross section of Figure 6A that are generated using different reconstruction parameters. As depicted, depending on the reconstruction parameters and process, the output of the reconstruction process (and therefore the input to the network 230) varies in both noise and clarity. Figure 7 depicts examples of segmentation map boundaries 710 on cross-sections with calcifications for the different reconstructed image data performed by the same machine trained network 230. As depicted, the boundaries are different for different reconstructed images. The evaluation module 240 compares the boundaries with a gold standard segmentation to determine which reconstruction parameters led to the optimal result whether for use in an existing network 230 or for use in training a network 230.

The output of the system 200 is one or more combinations reconstruction parameters that are optimal for use in an existing CAD application or for use in training a CAD application. The optimal reconstruction parameters may be used during imaging procedures that apply the CAD application.

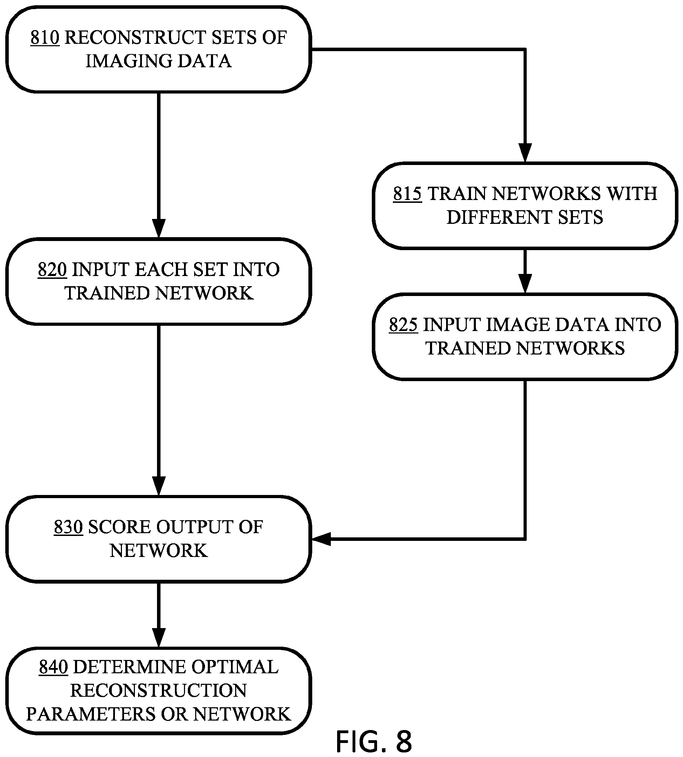

Figure 8 depicts an example workflow (Acts 810, 820, 830, 840) for determining optimized reconstruction parameters for an existing CAD application and an example workflow for training and identifying optimized networks 230 (Acts 810, 815, 825, 830, 840) using the system of Figure 1. A simulator 210 simulates imaging data with varied acquisition and reconstruction protocol parameters. The system identifies optimal parameters for existing ML solutions or optimal networks 230 trained on combinations of reconstruction parameters. The method is performed in the order shown or other orders. Additional, different, or fewer acts may be provided.

At act 810, the system 200 reconstructs a plurality of sets of imaging data from raw projection data, each set of the plurality of sets of imaging data using unique combinations of reconstruction parameters. The search space of reconstruction parameters includes reconstruction algorithms (weighted filtered backprojection and ADMIRE of varying strengths), reconstruction kernels, pixel spacing, slice thickness and spacing, and beam hardening corrections among others. In an embodiment, the combinations may include reconstruction parameters that attempt to preserve the raw sinogram data with as little additional processing as possible. These images present the ML applications with the most complete view of the raw, reconstructed, data without regard to aesthetic considerations. The number of combinations may be 10, 100, or more.

At act 820, the system 200 inputs each of the plurality of sets of imaging data into a machine trained network 230 for the given clinical task. Each of the networks 230 are configured for a specific clinical task. In an embodiment, the networks 230 are identical instances that are evaluated to determine which reconstruction parameters lead to optimal results. In another embodiment, each network 230 is trained using different training data provided by the simulator 210 and reconstructed using different reconstruction parameters.

The clinical tasks may include any ML / CAD task. One example of a clinical task uses a machine learned network 230 / model for segmentation. Image segmentation extracts or identifies regions of interest (ROI) through a semiautomatic or automatic process. Segmentation divides an image into areas based on a specified description, such as segmenting body organs/tissues in the medical applications for border detection, tumor detection/segmentation, and mass detection. Segmentation may also be used for other tasks such as detecting pathologies, not just healthy organs. For example, a cancer site, or a cyst. Other uses may include segmentation for quantitative measurements like size, change, or local texture / density distributions. Any method for segmentation may be used. For example, segmentation may be thresholding-based, region-based, shape-based, model based, neighboring based, and/or machine learning-based among other segmentation techniques. Thresholding-based methods segment the image data by creating binary partitions based on image attenuation values, as determined by the relative attenuation of structures on the images. Region-based segmentation compares one pixel in an image to neighboring pixels, and if a predefined region criterion (e.g., homogeneity) is met, then the pixel is assigned to the same class as one or more of its neighbors. Shape-based techniques use either an atlas-based approach or a model-based approach to find a lung boundary. Model-based methods use prior shape information, similar to atlas-based approaches; however, to better accommodate the shape variabilities, the model-based approaches fit either statistical shape or appearance models of the lungs to the image by using an optimization procedure. Neighboring anatomy-guided methods use the spatial context of neighboring anatomic objects of the lung (e.g., rib cage, heart, spine) for delineating lung regions. In machine learning-based methods, the lung abnormalities and boundaries are predicted on the basis of the features extracted from the image data.

At act 830, the system 200 scores an output of the machine trained network 230 for each of the input plurality of sets of imaging data. The score may represent the difference between the output and gold standard annotations / calculations. In an example, for semantic segmentation, an expert may annotate the image by drawing or otherwise differentiate an object or region from nearby others. A higher score, for example, may indicate that the output is more similar to the expert annotated data or vice versa. Other evaluation methods may be used. In a scenario the output of the network 230 is a value or group of values. The evaluation module 240 may calculate a score based on how many times over multiple attempts, the network 230 calculates the correct value (or within some margin of error). Scores over multiple input / output pairs may be aggregated or averaged to generate a final score that is used for evaluation. The evaluation process may function the same for both evaluating existing CAD applications and training new CAD applications. Different combinations of reconstruction parameters may be evaluated over different CAD applications, regions, or tasks.

At act 840, the system 200 identifies optimal reconstruction parameters based on the scoring. The combinations of reconstruction parameters and/or acquisition parameters that scores the best (most similar to the expert provided output) may be selected as the "optimal" set of parameters. Additional criteria may also be used to select the optimal reconstruction parameters such ease of use, use of computer resources, etc. The output of the method is a combination of reconstruction parameters to be used when performing a medical imaging procedure where the results will be analyzed by a CAD application for which the reconstruction parameters are optimal.

Figure 8 also depicts an example workflow for identifying reconstruction parameters for training a CAD application end to end. The training process may be similar to that of the process for Acts 810 - 840 and shares some features. As in act 810, a simulator 210 generates augmented data using different combinations of reconstruction parameters. In particular, "pseudo-raw" images (back projected sinogram) may be generated. These images are used to perform end-to-end learning for clinical tasks. This process may make new solutions robust to acquisition and reconstruction protocols.

At act 810, the system 200 reconstructs a plurality of sets of imaging data from a set of raw projection data, each set of the plurality of sets of imaging data using unique reconstruction parameters. In an embodiment, the reconstruction parameters are selected to best preserve the raw data of the sinogram. Sharp kernels are used to avoid filtering out high frequency information. WFBP applies no extra filtering. In addition, regularization strength may be minimized via low strength ADMIRE. These types of algebraic reconstruction provide a more faithful reconstruction that includes more noise and additional artifacts but also does not alter the image data to present a better display version.

At act 815, the system 200 machine trains different instances of a network 230 using different combinations of imaging data reconstructed using different reconstruction parameters. The network 230 is configured to perform a clinical task such as segmentation, contouring, or quantification of a feature from scan data acquired using an imaging device. Networks are typically trained or configured using large datasets of clinical data acquired using different reconstruction parameters and annotated data. The reconstruction parameters are typically set to provide data to an operator and thus may not be optimal for producing image data that is optimal for a CAD application. Here, however, the system may reconstruct data using the simulator 210 to provide better or more optimal training data so that when implemented the network 230 is better configured to provide optimal outputs when provided optimal input data.

For training, the network 230 inputs training data and generates an output. The output is compared to the training data. Where the training is supervised, the differences (e.g., L1, L2, mean square error, or other loss) between the estimated output and the ground truth output are minimized. A loss function may be used to identify the errors from the comparison. The loss function serves as a measurement of how far the current set of predictions are from the corresponding true values. Some examples of loss functions that may be used include Mean-Squared-Error, Root-Mean-Squared-Error, and Cross-entropy loss. Mean Squared Error loss, or MSE for short, is calculated as the average of the squared differences between the predicted and actual values. Root-Mean Squared Error is similarly calculated as the average of the root squared differences between the predicted and actual values. During training and over repeated iterations, the network 230 attempts to minimize the loss function as the result of a lower error between the actual and the predicted values means the network 230 has done a good job in learning. Different optimization algorithms may be used to minimize the loss function, such as, for example, gradient descent, Stochastic gradient descent, Batch gradient descent, Mini-Batch gradient descent, among others. The process of inputting, outputting, comparing, and adjusting is repeated for a predetermined number of iterations with the goal of minimizing the loss function. Backpropagation, RMSprop, ADAM, or another optimization may be used in learning the values of the learnable parameters of the network 230 (e.g., the convolutional neural network (CNN) or fully connection network (FCN)). The training process may be iterative and take multiple iterations. Once trained, each network 230 is stored for evaluation in acts 825 and 830.

At act 825, the system inputs image data into the trained networks 230. The image data may be augmented data reconstructed by the simulator 210 or clinical data acquired using a medical imaging device. The image data is annotated. At act 830, the system compares a performance of the different instances of the machine trained network 230 for the given clinical task. This act is similar to the act 810 described above except that the input is not image data reconstructed with different combinations of parameters, but rather the same image data and instead the networks 230 are different as each network 230 has been trained using different training data.

At act 840, the system 200 selects the optimized machine trained network 230 based the comparison. The ground truth / annotations are compared to the output to determine the performance of the machine trained networks 230. The best performing, e.g., the network 230 that generates an output that is most similar to the annotations may be selected as the optimal machine trained network 230 for the particular task. This network 230 may be used to provide the CAD application when used in a medical imaging procedure.

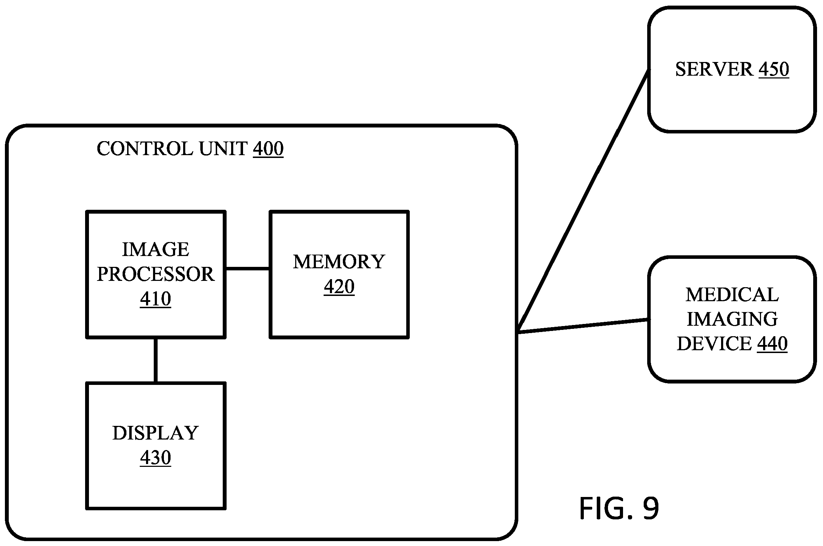

Figure 9 depicts an example system for implemented optimal reconstruction parameters / an optimal machine trained network 230 for a CAD application. The system includes a control unit 400, a server 450, and a medical imaging device 440. The control unit 400 includes an image processor 410, a memory 420, and an operator interface / display 430. The control unit 400 may include or be part of the medical imaging device 440. The server 450 may communicate with the control unit or the medical imaging device 440 over a network and may provide additional processing or storage for the methods described herein. Additional, different, or fewer components may be provided. For example, a computer network is included for remote image generation of locally acquired image data by the server. As another example, a user input device (e.g., keyboard, buttons, sliders, dials, trackball, mouse, or other device) is provided. In yet another example, the medical imaging device 440 is not provided.

The image processor 410 is a controller, control processor, general processor, micro-processor, tensor processor, digital signal processor, three-dimensional data processor, graphics processing unit, application specific integrated circuit, field programmable gate array, artificial intelligence processor, digital circuit, analog circuit, combinations thereof, or other now known or later developed device for processing image data. The image processor 410 is a single device, a plurality of devices, or a network of devices. For more than one device, parallel or sequential division of processing may be used. Different devices making up the image processor 410 may perform different functions. In one embodiment, the image processor 410 is a control processor or other processor of the medical imaging device 440. The image processor 410 operates pursuant to and is configured by stored instructions, hardware, and/or firmware to perform various acts described herein.

The image processor 410 is configured by software, firmware, and/or hardware to reconstruct a representation of a scan region, such as a region of the patient using different combinations of reconstruction and/or acquisition parameters. The image processor 410 may simulate the acquisition and reconstruction process using clinically acquired sinograms to simulate reconstructions with varied acquisition and reconstruction protocol parameters. The search space of reconstruction parameters includes reconstruction algorithms (weighted filtered backprojection and ADMIRE of varying strengths), reconstruction kernels, pixel spacing, slice thickness and spacing, and beam hardening corrections. Prominent in this search space are reconstructions which attempt to preserve the raw sinogram data with as little additional processing as possible.

The resulting images from the image processor 410 are input into a trained machine learnt network 230. The machine learnt network 230 is configured to perform a clinical task (CAD application) when input image data. The image processor 410 may be configured to provide the network(s) 230 with a most complete view of the raw, reconstructed, data without regard to aesthetic considerations. The resulting banks of augmented reconstructions may also be used to train CAD applications for clinical tasks. Training is done on each set of unique reconstruction parameters individually and collectively to develop optimal AI solutions optimized for a given clinical task. During training time besides using varied reconstruction parameters to augment the training data an optimization can be applied to select the best reconstruction parameters among a large range of possibilities that would yield the best performance on the selected clinical task (e.g., minimal deviations of produced anatomical contours for radiation therapy planning). The reconstruction parameters that lead to optimal algorithm performance can be tied to the algorithm version so that the medical imaging device 440 can automatically produce an optimal reconstructions for the CAD application instead of just a reconstruction for the radiologist or radiation oncologist. The clinical tasks may be, for example, coronary lumen segmentation and organ contouring for RT.

The image data, simulated augmented data, parameters, trained and untrained networks 230, and/or other information are stored in a non-transitory computer readable memory, such as the memory. The memory is an external storage device, RAM, ROM, database, and/or a local memory (e.g., solid state drive or hard drive). The same or different non-transitory computer readable media may be used for the instructions and other data. The memory may be implemented using a database management system (DBMS) and residing on a memory, such as a hard disk, RAM, or removable media. Alternatively, the memory is internal to the image processor 410 (e.g., cache). The instructions for implementing the authoring, generating, rendering, or application processes, the methods, and/or the techniques discussed herein are provided on non-transitory computer-readable storage media or memories, such as a cache, buffer, RAM, removable media, hard drive, or other computer readable storage media (e.g., the memory). Computer readable storage media include various types of volatile and nonvolatile storage media. The functions, acts or tasks illustrated in the figures or described herein are executed in response to one or more sets of instructions stored in or on computer readable storage media. The functions, acts or tasks are independent of the particular type of instructions set, storage media, processor or processing strategy and may be performed by software, hardware, integrated circuits, firmware, micro code, and the like, operating alone or in combination. In one embodiment, the instructions are stored on a removable media device for reading by local or remote systems. In other embodiments, the instructions are stored in a remote location for transfer through a computer network. In yet other embodiments, the instructions are stored within a given computer, CPU, GPU, or system. Because some of the constituent system components and method steps depicted in the accompanying figures may be implemented in software, the actual connections between the system components (or the process steps) may differ depending upon the manner in which the present embodiments are programmed.

The medical imaging device 440 is configured by the imaging protocol to scan a region of a patient. The medical image device may be a CT scanner as depicted in Figure 3. Other medical imaging modalities may be used such as MRI, PET, ultrasound, x-ray, etc.

The system includes an operator interface, formed by an input and an output. The input may be an interface, such as interfacing with a computer network, memory, database, medical image storage, or other source of input data. The input may be a user input device, such as a mouse, trackpad, keyboard, roller ball, touch pad, touch screen, or another apparatus for receiving user input. The input may receive a scan protocol, imaging protocol, or scan parameters. An individual may select the input, such as manually or physically entering a value. Previously used values or parameters may be input from the interface. Default, institution, facility, or group set levels may be input, such as from memory to the interface. The output is a display device but may be an interface. The images reconstructed from the scan are displayed. For example, an image of a region of the patient is displayed. A generated image of the reconstructed representation for a given patient is presented on a display of the operator interface. The output of a CAD application may also be displayed. Information derived or generated by the CAD application may also be provided or displayed using the display.

The display is a CRT, LCD, plasma, projector, printer, or other display device. The display is configured by loading an image to a display plane or buffer. The display is configured to display the reconstructed MR image of the region of the patient. The computer of the operator interface forms a graphical user interface (GUI) enabling user interaction with the central control unit and enables user modification in substantially real time. The display processor processes the magnetic resonance signals to provide image representative data for display on a display device, for example.

The image processor 410 may implement a CAD application such as contouring algorithms for radiation therapy planning, automatic measurements of clinical findings, detection and characterization of clinical findings. The image processor 410 may train a network 230 for use in a CAD application with a large variety of reconstruction parameters. Using one or more of the methods described above, optimal reconstruction parameters for CAD of a given clinical task may be identified and used to train or select an optimal network 230 for the respective task. In addition to using a greater quantity of data and testing a wider range of parameters, the system also is configured to use reconstructions tailored to best preserve the raw sinogram data. Such minimal processing provides the CAD application with the richest data possible images to operate on.

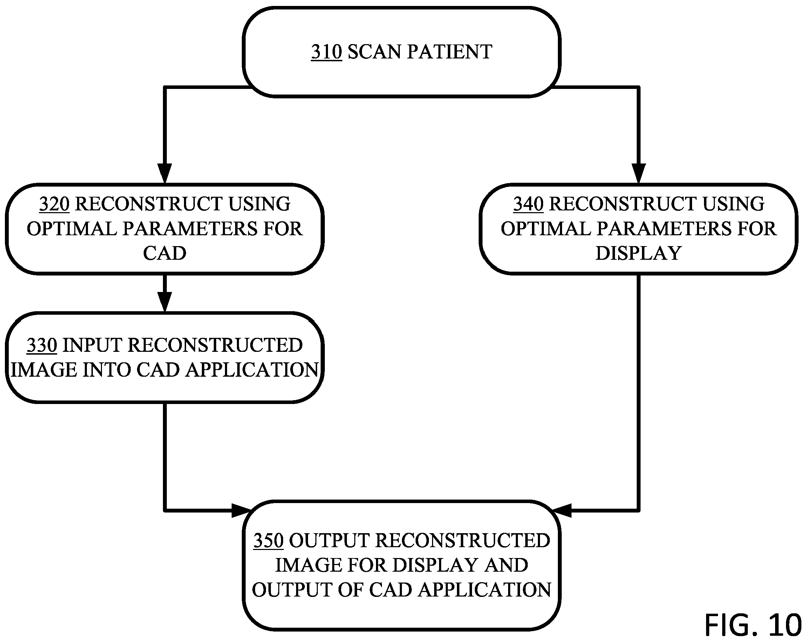

Figure 10 depicts an example of a bifurcated workflow that performs two different reconstruction tasks - one for a CAD application and one for display to an operator using the system of Figure 9. The optimal reconstruction parameters that lead to optimal algorithm performance may be tied to an algorithm version so that the medical imaging device 440 can automatically produce an optimal reconstructions for a CAD application instead of or in addition to a reconstruction for the radiologist or radiation oncologist. The method is performed in the order shown or other orders. Additional, different, or fewer acts may be provided.

At act 310, the medical imaging device 440 acquires raw data of a patient or object. At act 320, the image processor 410 reconstructs a first image using the raw data and a first set of reconstruction parameters. Data acquired from the medical imaging device 440 may not be acquired directly in image space. A set of data processing steps are required to turn the acquired raw data into actual images that can be interpreted by a clinician and/or a CAD application. Reconstruction is the process of transforming the acquired raw data to images. Different reconstruction processes may be used for different types of modalities and different procedures. The reconstruction parameters determine how the reconstruction process functions and the resulting output image. In an example, the reconstruction process may provide a high level of denoising so that the resulting image has fewer artifacts and has a cleaner look. In another example, the reconstruction parameters may lead to a more raw or unfiltered image. The first set of reconstruction parameters are determined using, for example a process described in Figure 8. These reconstruction parameters may generate a "raw" or image that is not processed so as to provide a CAD application with as much of the original acquired information as possible. The image, however, may not be useful for human consumption. Thus, a second image may be reconstructed at act 340 below.

At act 330, the image processor 410 inputs the first image into a machine learned network 230 configured to perform a specific clinical task. The machine learned network 230 is a previously trained network 230. The network 230 may be trained using the process of Figure 8 described above or may be an existing network 230 for which optimized reconstruction parameters are known, for example by implementing the process of Figure 8.

At act 340, the image processor 410 reconstructs a second image using the raw data a second set of reconstruction parameters. The first image may be optimized for machine learning detection. The second image may be optimized for human consumption, e.g., with fewer artifacts, more denoising. At act 350, the image processor 410 provides the first image and the results of the specific clinical task, for example using the display.

While many AI algorithms (such as contouring algorithms for radiation therapy planning, automatic measurements of clinical findings, detection, and characterization of clinical findings) are done with images processed for human readability. However, image information lost through processing for visual appeal may hinder the performance of CAD algorithms for clinical tasks. The system of Figure 1 provides an optimized network 230 that is trained with a large variety of reconstruction parameters as described above in the workflows of Figure 8. This training process provides optimal reconstruction parameters for CAD of a given clinical task. In addition to using a greater quantity of data and testing a wider range of parameters, depending on the clinical task, the reconstructions may be tailored to best preserve the raw sinogram data. The minimal processing provides the optimized network 230 with the richest data possible images to operate on. The system may provide specific reconstruction parameters for machine trained networks 230 for clinical tasks that produce images that outperform current methods for tasks such as automatic contouring of anatomies and lesions for radiation therapy, and/or automatic measurement of clinical findings and automatic detection and characterization of clinical findings.

Although the subject matter has been described in terms of exemplary embodiments, it is not limited thereto. Rather, the appended claims should be construed broadly, to include other variants and embodiments, which can be made by those skilled in the art.

## Claims

1. A method for determining optimal reconstruction parameters for clinical aided diagnostics of a given clinical task, the method comprising:
reconstructing a plurality of sets of imaging data from a set of raw data, each set of the plurality of sets of imaging data using unique combinations of reconstruction parameters;
inputting each of the plurality of sets of imaging data into a machine trained network for the given clinical task;
scoring an output of the machine trained network for each of the input plurality of sets of imaging data; and
identifying optimal reconstruction parameters based on the scoring.

2. The method of claim 1, wherein reconstructing comprises reconstructing using a simulator.

3. The method of claim 1 or 2, wherein one or more combinations of the reconstruction parameters provide minimized regularization of the imaging data.

4. The method of any one of claims 1-3, wherein scoring comprises comparing the output to expert annotated data.

5. The method of any one of claims 1-4, further comprising:
performing a medical imaging procedure to acquire scan data;
reconstructing a first image from the scan data using the optimal reconstruction parameters;
inputting the image into a computer aided diagnostic application configured for a clinical task; and
providing a diagnosis based on an output of the computer aided diagnostic application.

6. The method of claim 5, further comprising:
reconstructing a second image from the scan data using a different set of reconstruction parameters; and
displaying the second image for an operator.

7. A method for generating an optimized machine trained network for clinical aided diagnostics of a given clinical task, the method comprising:
reconstructing a plurality of sets of imaging data from a set of raw data, each set of the plurality of sets of imaging data using different combinations of reconstruction parameters;
machine training different instances of a network using different combinations of the plurality of sets of imaging data reconstructed using different reconstruction parameters;
comparing a performance of the different instances of the machine trained network for the given clinical task; and
selecting the optimized machine trained network based the comparison.

8. The method of any one of claims 1-7, wherein the set of raw data comprises CT data, in particular, a CT sinogram.

9. The method of any one of claims 1-8, wherein the reconstruction parameters comprise one or more of reconstruction algorithms, reconstruction kernels, pixel spacing, slice thickness and spacing, and beam hardening corrections.

10. The method of any one of claims 7-9, wherein the different combinations of reconstruction parameters comprise reconstruction parameters configured to provide minimized processing of the raw data.

11. The method of any one of claims 1 - 10, wherein the given clinical task comprises a segmentation of an organ of a patient, coronary lumen segmentation and/or organ contouring.

12. The method of any one of claims 7 - 11, further comprising:
performing a medical imaging procedure to acquire scan data;
reconstructing a first image from the scan data using the reconstruction parameters configured to provide minimized processing of the scan data ;
inputting the image into the optimized machine trained network; and
providing an output of the optimized machine trained network.

13. The method of any one of claims 1 - 12, wherein the network comprises a convolutional neural network.

14. A system for clinical aided diagnostics of a given clinical task, the system comprising:
a medical imaging device configured to acquire raw data;
a machine trained network configured for the given clinical task; and
an image processor configured to select optimal reconstruction parameters for the machine trained network, reconstruct a first image using the optimal reconstruction parameters, and input the first image into the machine trained network for the given clinical task, the image processor further configured to reconstruct a second image using different reconstruction parameters, wherein the image processor is, in particular, implemented to execute a method according to any one of claims 1 - 13;
wherein the second image and the output of the machine trained network are provided to an operator.

15. The system of claim 14, further comprising:
a display configured to display the second image the output of the machine trained network.
